# EUROPÄISCHE PATENTSCHRIFT

(11) **EP 2 710 869 B1**
(45) Veröffentlichungstag und Bekanntmachung des Hinweises auf die Patenterteilung: **12.08.2015**
(21) Anmeldenummer: 13173322.2
(22) Anmeldetag: 24.06.2013
(51) Int. Cl.: A01B 59/06

(54) **Geräteanbauvorrichtung eines Arbeitsfahrzeugs**
Implement attachment device of a work vehicle
Dispositif porte-outils frontal d'un véhicule de travail

(30) Priorität: 21.09.2012 DE 102012108904
(43) Veröffentlichungstag der Anmeldung: 26.03.2014
(73) Patentinhaber: CLAAS Selbstfahrende Erntemaschinen GmbH, 33428 Harsewinkel (DE)
(72) Erfinder: Richard, Christian, 33428 Harsewinkel (DE)

(56) Entgegenhaltungen:
- EP-B1- 1 579 750
- WO-A1-2008/046958
- DE-A1- 10 122 955

## Beschreibung

Die Erfindung betrifft eine Geräteanbauvorrichtung eines Arbeitsfahrzeugs mit einer Dreipunktaufhängung zur Aufnahme eines Anbaugerätes, welche ein Paar Unterlenker sowie einen ortsfest am Arbeitsfahrzeug angelenkten Oberlenker aufweist, wobei die Unterlenker mit zumindest einer Hubeinrichtung zusammenwirken, die an jedem der Unterlenker zumindest mittelbar angreift, und jeweils mit einem ersten Ende über eine gemeinsame horizontale Drehachse schwenkbar am Arbeitsfahrzeug geführt sind, in einer Grundstellung unter einem identischen Winkel zu einer vertikalen Längsmittelebene des Arbeitsfahrzeuges verlaufen und mit ihren zweiten Enden über mit Aufnahmen versehene Kuppelelemente an das Anbaugerät kuppelbar sind, mit einer Schwenkeinrichtung zur synchronen Verlagerung der Unterlenker aus ihrer Grundstellung heraus in eine Position, in welcher der Winkel des einen Unterlenkers vergrößert und der des anderen Unterlenkers analog verkleinert ist.

Entsprechende Arbeitsfahrzeuge, die mit Geräteanbauvorrichtungen in Form einer Dreipunktaufhängung versehen sind, werden insbesondere als landwirtschaftliche oder kommunale Schlepper bzw. Systemfahrzeuge verwendet. Eine als Dreipunktaufhängung ausgebildete Geräteanbauvorrichtung kommt dabei sowohl im Front- als auch im Heckbereich des Arbeitsfahrzeugs zur Anwendung. Das Anbaugerät, bei dem es sich beispielsweise um ein Bodenbearbeitungsgerät handeln kann, wird an die zweiten Enden der Unterlenker angekuppelt, wofür das Anbaugerät horizontal verlaufende Tragzapfen aufweist. Über einen weiteren, vorzugsweise mittig des Anbaugerätes vorgesehenen Tragzapfen wird dieses mit dem Oberlenker der Dreipunktaufhängung verbunden, wobei das Anbaugerät bei Betätigung der Hubvorrichtung über diese drei Lenker mit einem definierten Radius zum Arbeitsfahrzeug geführt wird. Die Lage des Anbaugerätes in Bezug zum Boden lässt sich dabei durch eine Längenverstellung des Oberlenkers korrigieren bzw. einstellen.

Sowohl die Unterlenker als auch der Oberlenker können an ihrem mit dem Anbaugerät verbindbaren Ende mit einem Schnellkuppelsystem in Form von Fanghaken versehen sein. Neben einer Ausbildung der Hubvorrichtung, die einen in einem Kraftheberblock angeordneten Hubkolben und beidseitige Hubarme aufweist, sind Ausgestaltungen bekannt, bei denen jedem Unterlenker ein separater Hubzylinder zugeordnet ist. Diese Hubzylinder können dabei die Unterlenker, die über ihre ersten Enden schwenkbar am Arbeitsfahrzeug geführt sind, entweder über zusätzliche Schwenkhebel und davon ausgehende Hubstangen heben und senken oder sie können unmittelbar an den Unterlenkern angreifen.

Neben der Höheneinstellung des Anbaugeräts durch das Schwenken der zweiten Enden der Unterlenker in vertikaler Richtung kann, je nach Ausbildung der Geräteanbauvorrichtung auch eine Verschwenkung der Unterlenkung gegenüber einer vertikalen Längsmittelebene des Arbeitsfahrzeuges erfolgen. Eine derartige Verstellung des Anbaugerätes gegenüber dem in Block- oder Rahmenbauweise ausgebildeten Arbeitsfahrzeug wird insbesondere dann vorgenommen, wenn das Arbeitsfahrzeug durch eine gleichgerichtete Lenkbewegung an der Vorder- und an der Hinterachse im sogenannten Hundegang betrieben wird. In diesem bewegen sich die Vorderräder und Hinterräder aufgrund gleich gerichteten Lenkeinschlags der Räder der Vorderachse und der Hinterachse nicht in einer Spur sondern in parallel zueinander verlaufenden Spuren. Dieser Betrieb hat sich insbesondere in Verbindung mit einer entsprechenden Terrabereifung als sehr bodenschonend erwiesen, da der Boden nicht mehr in den beiden Spuren extrem verdichtet wird. Diese extreme Verdichtung hat dazu geführt, dass sich diesen Spuren eine ausreichende Bodengare nicht entwickeln kann und sich nach Niederschlägen Wasser in diesen Spuren sammelt.

Eine Geräteanbauvorrichtung eines Arbeitsfahrzeugs der im Oberbegriff des Patentanspruchs 1 angegebenen Gattung ist aus der EP 1 579 750 B1 bekannt. Dabei ist unterhalb eines Fahrzeugrahmens ein Unterrahmen angebracht, an welchem über einen vertikal verlaufenden Bolzen ein Rahmen schwenkbar geführt ist. An diesem verdrehbaren Rahmen sind die Unterlenker angelenkt. Demgegenüber sind sowohl die Hubvorrichtung, die aus jeweils den Unterlenkern zugeordneten Hubzylindern besteht, als auch der Oberlenker ortsfest am Fahrzeugrahmen geführt. Werden die Unterlenker durch eine Verlagerung von deren ersten Enden verschwenkt, wobei die Positionen der Hubvorrichtung und des Oberlenkers beibehalten wird, so resultiert daraus eine Schrägstellung des Anbaugerätes gegenüber dem Boden.

Es ist daher Aufgabe der vorliegenden Erfindung, eine kompakte Bauweise der Schwenkeinrichtung zu ermöglichen, mit der eine Schrägstellung des Anbaugeräts gegenüber dem Arbeitsfahrzeug vermieden wird.

Diese Aufgabe wird nach dem kennzeichnenden Teil des Patentanspruchs 1 dadurch gelöst, dass zwischen der zumindest einen Hubvorrichtung und jedem der Unterlenker eine Stelleinrichtung angeordnet ist, mittels welcher bei einer durch die Schwenkeinrichtung bewirkten Verlagerung der Unterlenker eine unveränderte horizontale Lage von deren zweiten Enden beibehalten wird.

Das Anbaugerät kann somit durch die Verschwenkung der Unterlenker gegenüber dem Fahrgestell des Arbeitsfahrzeuges in eine Stellung gebracht werden, in der es unter einem Winkel zur Vorder- oder Hinterachse des Arbeitsfahrzeuges verläuft und betrieben wird. Wenn, wie beschrieben, das Arbeitsfahrzeug zur Bodenschonung im Hundegang über den Boden fährt, nimmt das Anbaugerät eine Lage ein, in der es unter einem Winkel zur Fahrtrichtung des Arbeitsfahrzeuges verläuft. Der Oberlenker der Dreipunktaufhängung ist dabei in der üblichen Weise an einem ortsfest am Block oder Rahmen des Arbeitsfahrzeugs ausgebildeten Anlenkpunkt fixiert, so dass nur eine Verlagerung der Unterlenker aus ihrer Grundstellung heraus erfolgt. Diese starre Anlenkung des Oberlenkers und die mittels der Schwenkeinrichtung bewirkten Verlagerung der Unterlenker würde aufgrund der entsprechenden Anlenkung dieser Bauelemente zu der im Zusammenhang mit der Anordnung nach dem Stand der Technik auftretenden Kippbewegung des Anbaugeräts um dessen Längsmittelachse führen, so dass sich in entsprechender Weise ein vorgegebener Abstand der Arbeitswerkzeuge des Anbaugeräts gegenüber dem Boden verändern würde.

Dieser Nachteil wird erfindungsgemäß dadurch beseitigt, dass zwischen der Hubeinrichtung und jedem der Unterlenker eine Stelleinrichtung angeordnet ist, die selbsttätig oder in entsprechender Weise gesteuert eine gegenläufige Bewegung ausführt, so dass diese Kippbewegung bereits während der Schwenkbewegung der Schwenkeinrichtung korrigiert wird. Das Arbeitsgerät nimmt folglich auch nach einer Verlagerung der Unterlenker eine horizontale bzw. vorgegebene Lage ein, die es zu Beginn der durch die Schwenkeinrichtung vorgenommenen Verstellung eingenommen hat. Die Kippbewegung könnte auch dadurch vermieden werden, dass die gesamte Dreipunktaufhängung einschließlich der Hubeinrichtung an einem gegenüber dem Fahrzeugrahmen schwenkbaren Rahmen angeordnet würde. Eine erfindungsgemäß ausgebildete Geräteanbauvorrichtung lässt sich gegenüber einer derartigen Lösung mit erheblich geringerem baulichen Aufwand schaffen, und die Länge des Arbeitsfahrzeugs mit einer erfindungsgemäß ausgebildeten Schwenkeinrichtung stimmt im Wesentlichen mit der eines Arbeitsfahrzeuges ohne Schwenkeinrichtung überein, da kein gesonderter, sich über den Front- oder Heckbereich des Arbeitsfahrzeuges hinaus erstreckender Rahmen vorzusehen ist, an welchem im anderen Fall sowohl der Oberlenker als auch die Unterlenker angelenkt werden müssten.

Demgegenüber ist nach der EP 1 579 750 B1 keine Stelleinrichtung vorgesehen, über die ein Verkippen des Anbaugerätes nicht verhindert wird. Wird bei dieser Geräteanbauvorrichtung das Anbaugerät durch die Verlagerung der Unterlenker verschwenkt, so nimmt es anschließend gegenüber dem Boden eine Schräglage ein, so dass die Arbeitswerkzeuge des Anbaugeräts, über dessen Arbeitsbreite gesehen, mit unterschiedlichen Arbeitstiefen in den Boden eingreifen oder bei Mähwerken bzw. Heuwerbungsmaschinen in die Grasnarbe eingreifen.

In weiterer Ausgestaltung der Erfindung soll die Stelleinrichtung über Hubstreben mit jedem der Unterlenker verbunden sein. Über diese Hubstreben wird von der Hubeinrichtung aus die Hubbewegung auf die an ihren ersten Enden schwenkbar geführten Unterlenker übertragen, wobei die Hubeinrichtung im Fall einer heckseitigen Geräteanbauvorrichtung als auf einem Gehäuse des Hinterachsdifferentials angeordneten Kraftheber mit einem Hubzylinder und beidseitigen Hubstreben ausgebildet sein kann. Bei dieser heckseitigen Geräteanbauvorrichtung kann die Hubvorrichtung aber auch als Paar von Hubzylindern ausgebildet sein, die jeweils an schwenkbar am Block oder einem Fahrzeugrahmen geführten Hubschwingen angreifen. Bei frontseitigen Geräteanbauvorrichtungen wird es sich in der Regel um eine Hubvorrichtung mit einzelnen Hubzylindern handeln, die an entsprechenden Hubschwingen angreifen. In diesen Fällen soll die Stelleinrichtung unmittelbar an den Hubstreben angreifen, um eine Korrektur der Lage der Unterlenker herbeiführen zu können.

Alternativ dazu soll die Stelleinrichtung unmittelbar an den Unterlenkern angreifen. Das wird insbesondere dann der Fall sein, wenn von einem Block oder Rahmenteil des Arbeitsfahrzeugs zwei Hubzylinder, die die Hubvorrichtung bilden, ausgehen und die Hubbewegung auf die Unterlenker übertragen. In diesem Fall kann die Stelleinrichtung zwischen den Hubzylindern und den Unterlenkern vorgesehen sein.

Weiterhin ist in weiterer Ausgestaltung der Lösung, wonach die Stelleinrichtung über Hubstreben mit jedem der Unterlenker verbunden ist, vorgesehen, dass die Stelleinrichtung als Pendelbrücke ausgebildet ist, wobei ein Basislenker und ein Pendellenker mittig über eine Schwenkachse zueinander geführt sind, wobei die Hubeinrichtung zwei am Arbeitsfahrzeug angelenkte Hubarme aufweist, die jeweils starr mit den Enden des Basislenkers verbunden sind, und wobei beide Enden des Pendellenkers jeweils über Gelenke an den Hubstreben angreifen. Somit übertragen die Hubarme die Hubbewegung auf den Basislenker, in dessen Mitte der Pendellenker schwenkbar geführt ist. Die Kinematik der Geräteanbauvorrichtung ist folglich derart gestaltet, dass bei einer Verlagerung der Unterlenker ein Verkippen des Anbaugerätes dadurch vermieden wird, dass der Pendellenker über die Schwenkachse eine Ausgleichbewegung gegenüber dem Basislenker ausführt und das Anbaugerät in der entsprechenden horizontalen Lage verbleibt. Somit kann mit baulich einfachen Mitteln eine entsprechende Stelleinrichtung geschaffen werden, mit deren Hilfe ein Verkippen des Anbaugeräts bei einer Verlagerung der Unterlenker vermieden wird.

Greift die Hubvorrichtung, wie zuvor beschrieben, unmittelbar an den Unterlenkern an, so soll in weiterer Ausgestaltung dieser Anordnung die Stelleinrichtung ebenfalls als Pendelbrücke ausgebildet sein, und dabei ein Basislenker und ein Pendellenker mittig über eine Schwenkachse zueinander geführt sein, wobei allerdings die Hubeinrichtung zwei den Unterlenkern zugeordnete Hubzylinder aufweist, die jeweils mit einem ersten Ende am Arbeitsfahrzeug und mit einem zweiten Ende starr am Basislenker angreifen, und wobei beide Enden des Pendellenkers über Gelenke mittelbar oder unmittelbar mit den Unterlenkern verbunden sind. Die zuvor beschriebene als Pendelbrücke ausgebildete Stelleinrichtung ist in diesem Fall also im Bereich der Unterlenker vorgesehen und kann in entsprechender Weise eine Kippbewegung und somit eine Schrägstellung des Anbaugeräts gegenüber dem Boden selbsttätig vermeiden.

Außerdem ist bei einer Anordnung der Pendelbrücke zwischen den Hubstreben und Hubarmen der Hubeinrichtung vorgesehen, dass die jeweilige Schwenkachse der Pendelbrücke im Wesentlichen in der gemeinsamen Ebene der Hubarme verläuft. Die Schwenkachse weist somit einen rechtwinkligen Verlauf zu den Hubstreben auf, wodurch sich in den unterschiedlichen Stellungen der Hubarme jeweils eine günstige Koppelung der von der Schwenkeinrichtung hervorgerufenen Verlagerung der Unterlenker und der entsprechenden Stellbewegung des Pendellenkers erzielen lässt.

Erfindungsgemäß soll weiterhin bei einer Anordnung der Pendelbrücke im Bereich der Unterlenker die Schwenkachse der Pendelbrücke in der Grundstellung der Unterlenker im Wesentlichen auf einer Ebene oder parallel zu einer Ebene der Unterlenker verlaufen. In diesem Fall weist die Schwenkachse ebenfalls eine Orientierung auf, die der jeweiligen Lage der Unterlenker entspricht.

Außerdem sollen die Unterlenker mittels ihrer ersten Enden vertikal schwenkbar an einem am Arbeitsfahrzeug angeordneten als Schwenkeinrichtung dienenden Drehschemel geführt sein, wobei der Drehschemel über eine im Wesentlichen vertikale Achse drehbar gelagert und über ein an diesem radial angreifendes Stellglied verstellbar ist. Wenn eine entsprechende Geräteanbauvorrichtung im Heckbereich eines in Blockbauweise ausgebildeten Arbeitsfahrzeuges vorgesehen werden soll, so ist eine Anlenkung eines entsprechenden Drehschemels beispielsweise derart zu gestalten, dass unterhalb eines Gehäuses eines Hinterachsgetriebes mit Abstand eine Konsole angeordnet wird, wobei die als Wellenstummel ausgebildete vertikale Achse einerseits im Hinterachsgetriebe und andererseits in der Konsole geführt ist. Der Drehschemel wird dann zwischen der Konsole und dem Hinterachsgetriebe auf der vertikalen Achse schwenkbar geführt.

Die entsprechenden radial angreifenden Stellglieder können als einfach wirkende oder doppelt wirkende Hydraulikzylinder ausgebildet sein. Es besteht darüber hinaus natürlich auch die Möglichkeit, elektromechanische Stellglieder in Form von Spindeltrieben vorzusehen. Bei einer Anordnung der Geräteanbauvorrichtung im Frontbereich eines Arbeitsfahrzeuges soll vorzugsweise ein von einem Vorderachslagerblock ausgehender Rahmen vorgesehen sein, der ebenfalls entsprechende zueinander beabstandete Tragkonsolen aufweist, durch die die vertikale Achse geführt ist. Auch in diesem Fall wird eine entsprechende Schwenkbewegung durch das radial angreifende Stellglied erzielt.

In beiden Fällen kann der Schwenkwinkel durch einen dem Drehschemel zugeordneten Drehwinkelsensor erfasst werden, so dass auf ein aufwändiges Wegmesssystem verzichtet werden kann. Alternativ zu der vorstehend erläuterten Verstellung der Unterlenker über einen Drehschemel kann eine Verschwenkung auch dadurch herbeigeführt werden, dass die beiden Unterlenker mit ihren ersten Enden ortsfest an einem Rahmen oder einem Block des Arbeitsfahrzeuges angelenkt sind, wobei diese Anlenkungen als Kugelgelenke ausgebildet ist. In diesem Fall wird jeder der beiden Unterlenker über ein Stellglied um diese vorderen Anlenkpunkte verschwenkt, wodurch ebenfalls die Lage des Anbaugeräts verändert werden kann. Diese Art der Verschwenkung des Anbaugeräts lässt gegenüber der Ausbildung der Geräteaufhängung mit einem Drehschemel aber nur vergleichsweise geringe Schwenkwinkel zu.

Schließlich ist noch vorgesehen, dass bei Anordnung der Unterlenker an einem Drehschemel zwischen diesen mit Abstand zu deren zweiten Enden eine Querstrebe angeordnet ist, durch die diese trapezförmige bzw. parallele Lage der Unterlenker zueinander stabilisiert ist.

Zur weiteren Erläuterung der Erfindung wird auf die Zeichnung verwiesen, in der zwei Ausführungsbeispiele der Erfindung vereinfacht dargestellt sind. Es zeigen:
- Figur 1: als schematische Darstellung einer Draufsicht auf ein Arbeitsfahrzeug, welches im Hundegang betrieben wird, mit einem an diesem über eine Geräteanbauvorrichtung befestigten Anbaugerät,

- Figur 2: eine perspektivische Ansicht einer mit einer Schwenkeinrichtung und einer erfindungsgemäßen Stelleinrichtung versehenen Geräteanbauvorrichtung,
- Figur 3: eine Teilansicht der Geräteanbauvorrichtung mit einer Ansicht auf die Stelleinrichtung,
- Figur 4: eine Schnittdarstellung durch die Schwenkeinrichtung nach der Figur 2 im Bereich der Schwenkeinrichtung und der mit diesen verbundenen Stellgliedern,
- Figur 5: ein weiteres Ausgestaltungsbeispiel der Erfindung, bei dem die Stelleinrichtung im Bereich der Unterlenker angeordnet ist,
- Figur 6: eine Draufsicht auf eine Anordnung nach der Figur 5 mit einem Schnitt im Bereich der Schwenkeinrichtung und
- Figur 7: eine Teilansicht auf eine als Pendelbrücke ausgebildete Stelleinrichtung, bei der die Lage eines Pendellenkers mit der eines Basislenkers übereinstimmt.

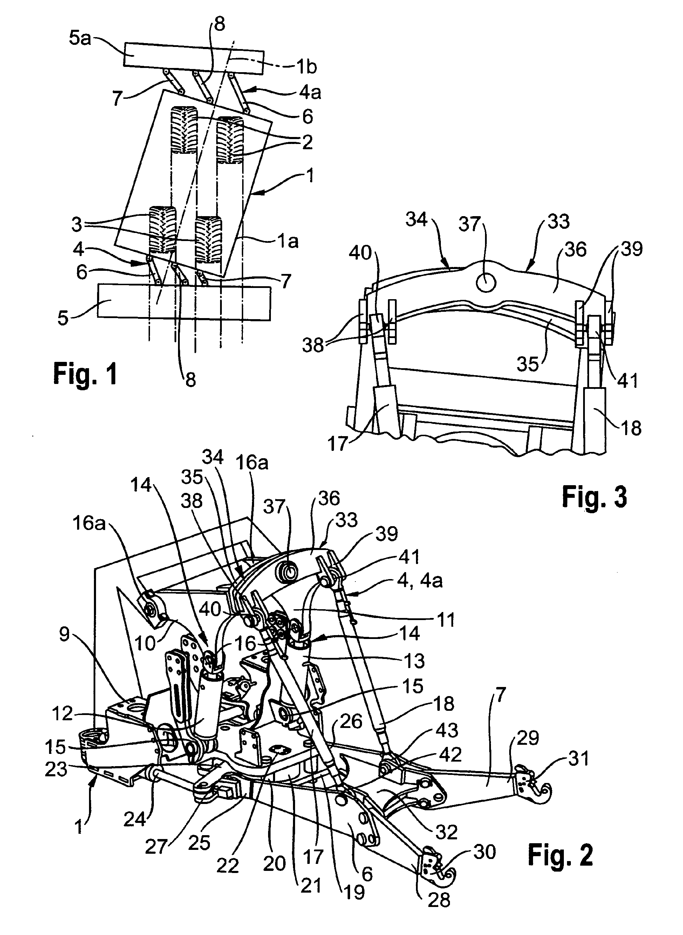

In der Figur 1 ist mit 1 ein Arbeitsfahrzeug bezeichnet, dessen Vorderräder 2 und Hinterräder 3 mit einem gleichgerichteten Lenkeinschlag betrieben werden, in der sich das Arbeitsfahrzeug im Hundegang bewegt. In diesem Hundegang erzeugt jedes der Räder 2 und 3 eine Fahrspur, so dass das Arbeitsfahrzeug bodenschonend betrieben werden kann. Für eine Straßenfahrt und für einen Betrieb des Arbeitsfahrzeuges in Reihenkulturen wird das Arbeitsfahrzeug 1 ohne diesen Lenkeinschlag betrieben, d. h., es bewegt sich dann in einer Längsrichtung seines Fahrzeugrahmens oder -blocks 1a, für welchen mit 1 b eine Längsmittelebene des Arbeitsfahrzeugs bezeichnet ist, und nicht unter einem Winkel zu diesem bzw. zur Längsmittelebene 1 b.

An dem Arbeitsfahrzeug 1 ist über eine heckseitige Geräteanbauvorrichtung 4 ein Anbaugerät 5 befestigt, bei dem es sich beispielsweise um ein Bodenbearbeitungsgerät handeln kann. Weiterhin weist das Arbeitsfahrzeug 1 in seinem Frontbereich eine Geräteanbauvorrichtung 4a auf, die ein Anbaugerät 5a aufnimmt. Die Geräteanbauvorrichtungen 4 und 4a weisen zur Aufnahme der Anbaugeräte 5 und 5a jeweils zwei Unterlenker 6 und 7 sowie einen oberhalb der Unterlenker 6 und 7 angeordneten Oberlenker 8 auf. Diese Unterlenker 6 und 7 sowie der Oberlenker 8 bilden für das entsprechende Anbaugerät 5 oder 5a eine Dreipunktaufhängung.

In der Figur 2 ist eine detailliertere Darstellung einer ersten Ausführungsform der Geräteanbauvorrichtung 4 bzw. 4a dargestellt. Danach weist das Arbeitsfahrzeug 1 ein Rahmenteil 9 auf, an dem Hubarme 10 und 11 schwenkbar gelagert sind, wobei an diesen eine im Wesentlichen dreieckige Kontur aufweisenden Hubarmen 10 und 11 Hubzylinder 12 und 13 angreifen. Diese Hubzylinder 12 und 13 bilden zusammen mit den Hubarmen 10 und 11 eine Hubeinrichtung 14. Dabei greift jeder der Hubzylinder 12 und 13 mit seinem einen Ende über ein erstes Schwenklager 15 an dem Rahmenteil 9 an und mit einem zweiten Schwenklager 16 an dem Hubarm 10 bzw. 11. Die beiden Hubarme 10 und 11 können dabei, verstellt über die Hubzylinder 12 und 13 eine Schwenkbewegung um eine horizontale Achse 16a ausführen, wodurch die Unterlenker 6 und 7 mittels Hubstreben 17 und 18 angehoben oder abgesenkt werden.

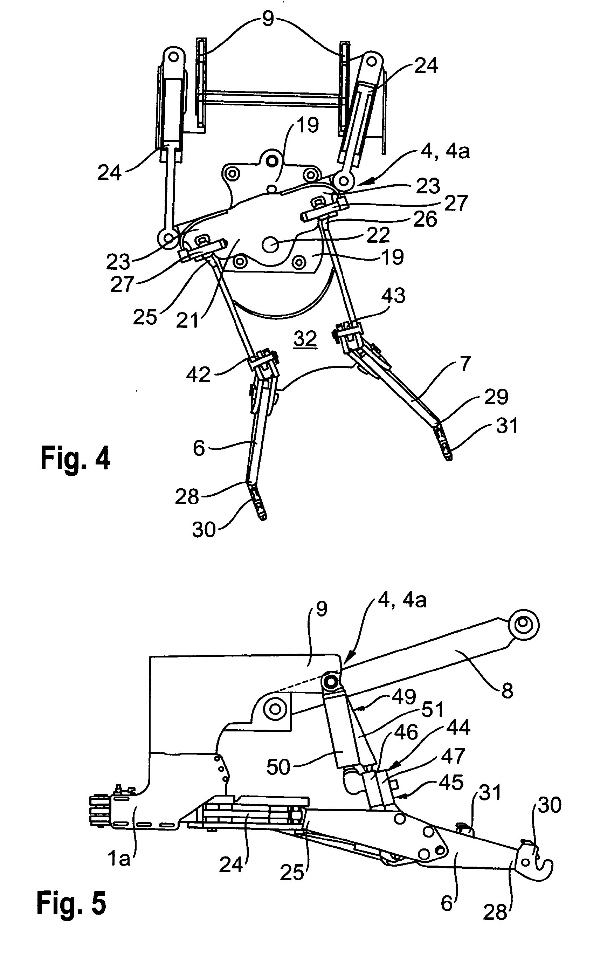

Am Rahmenteil 9 ist außerdem mit Abstand eine Konsole 19 befestigt, wobei in einem zwischen dem Rahmenteil 9 und der Konsole 19 geschaffenen Zwischenraum 20 ein Drehschemel 21 über eine vertikale Achse 22 geführt ist. Dieser Drehschemel 21 weist, wie aus der Figur 4 hervorgeht, zwei radiale Erstreckungen 23 auf, von denen in der Figur 2 eine radiale Erstreckung 23 sichtbar ist. An dieser radialen Erstreckung 23 greift ein Stellglied 24 an, das sich mit seinem anderen Ende am Rahmenteil 9 abstützt. Dieses Stellglied 24, das im vorliegenden Fall als einfach wirkender Hydraulikzylinder ausgebildet ist, kann demzufolge den Drehschemel 21 um die vertikale Achse 22 verdrehen. Die Unterlenker 6 und 7 weisen erste Enden 25 und 26 auf, mit denen sie über eine gemeinsame horizontale Drehachse 27 schwenkbar am Drehschemel 21 geführt sind.

Weiterhin sind die Unterlenker 6 und 7 an zweiten Enden 28 und 29 mit als Fanghaken ausgebildeten Kuppelelementen 30 und 31 versehen, mit denen sie an nicht näher dargestellte Kuppelbolzen der Anbaugeräte 5 bzw. 5a ankuppelbar sind. Die Unterlenker 6 und 7 sind weiterhin zueinander über eine Querstrebe 32 abgestützt, so dass deren Abstand zueinander konstant gehalten wird und die Kuppelelemente 30 und 31 zueinander eine definierte Lage einnehmen. Wie weiterhin aus der Figur 2 hervorgeht, ist zwischen den Hubarmen 10 und 11 und den mit den Unterlenkern 6 und 7 verbundenen Hubstreben 17 und 18 eine Stelleinrichtung 33 angeordnet.

Diese Stelleinrichtung 33 ist als Pendelbrücke 34 ausgebildet und besteht demzufolge aus einem starr mit den beiden Hubarmen 10 und 11 verbundenen Basislenker 35 und einem an diesem schwenkbar geführten Pendellenker 36. Zu diesem Zweck weisen die beiden Lenker 35 und 36 eine sie mittig verbindende Schwenkachse 37 auf, die als von dem Basislenker 35 ausgehender Wellenstummel ausgebildet sein kann, auf dem der Pendellenker 36 schwenkbar geführt ist. Der Pendellenker 36 weist, wie weiterhin aus der Figur 2 hervorgeht, an seinen beiden Enden gabelförmige Laschen 38 und 39 auf, in denen die Hubstreben 17 und 18 über Kugelgelenke 40 und 41 geführt sind. Die beiden Hubstreben 17 und 18, die vorzugsweise längenveränderlich sind, weisen an ihren anderen Enden ebenfalls Kugelgelenke auf, die mit 42 und 43 bezeichnet sind und mit denen sie an den Unterlenkern 6 und 7 angreifen.

In der Figur 3 ist der Drehschemel 21, wie im Einzelnen in der Draufsicht in Figur 4 dargestellt, im Gegenuhrzeigersinn verschwenkt, so dass die Geräteanbauvorrichtungen 4 und 4an eine etwa der Figur 1 entsprechende Stellung einnehmen. Da die Anbaugeräte 5 und 5a über die Kuppelelemente 30 und 31 und den in der Figur 2 nicht dargestellten Oberlenker in der entsprechenden Dreipunktaufhängung getragen werden, wobei der jeweilige Oberlenker ortsfest am Rahmenteil 9 fixiert ist, führt diese Schwenkbewegung zu einer Anstellung der Hubstreben 17 und 18 mit unterschiedlichen Winkeln. Wären diese Hubstreben 17 und 18 dabei unmittelbar an den Hubarmen 10 und 11 fixiert, so würde das dazu führen, dass das von den Kuppelelementen 30 und 31 sowie dem Oberlenker aufgenommene Anbaugerät 5 bzw. 5a um seine Längsachse kippt, wodurch seine Arbeitswerkzeuge unterschiedliche Abstände zum Boden aufweisen würden.

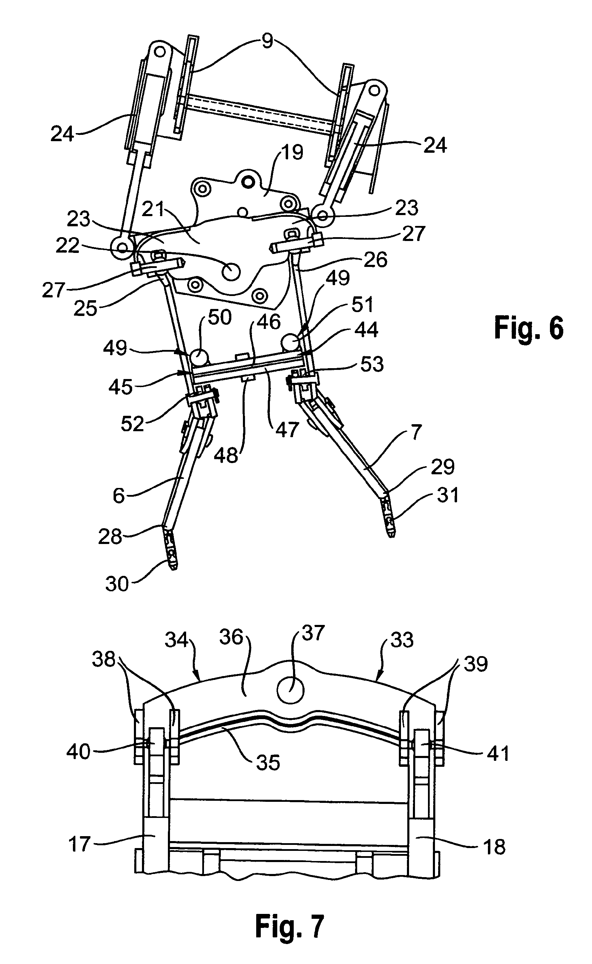

Diese Kippbewegung wird erfindungsgemäß dadurch verhindert, dass der Pendellenker 36 eine entsprechende Ausgleichsbewegung ausführen kann, die sowohl aus der Figur 2 als auch aus der Figur 3 hervorgeht. Die entsprechende Bewegung des Drehschemels 21 und somit die Verlagerung der ersten Enden 25 und 26 der Unterlenker 6 und 7 über die radialen Erstreckungen des Drehschemels 21 geht aus der Draufsicht auf die Geräteanbauvorrichtung 4 in der Figur 4 hervor. Außerdem wird in diesem Zusammenhang bereits auf die Figur 7 verwiesen, in der eine Stellung der Stelleinrichtung 33 dargestellt ist, die diese einnimmt, wenn sich die aus dem Drehschemel 21 und den beiden Stellgliedern 24 bestehende Schwenkeinrichtung gemeinsam mit den Unterlenker 6 und 7 einer Grundstellung befindet, in der die Unterlenker 6 und 7 mit im Wesentlichen gleichem Winkel zu der in der Figur 1 dargestellten vertikalen Längsmittelebene 1 b des Fahrzeugrahmens oder -blocks 1 a verlaufen. Aus der Figur 7 geht hervor, dass in diesem Fall der Pendellenker 36 eine mit dem Basislenker 35 übereinstimmende Lage einnimmt. Daher hat in diesem Fall keine Korrektur der Lage der Unterlenker 6 und 7 stattgefunden.

Ein weiteres Ausgestaltungsbeispiel der Erfindung geht aus den Figuren 5 und 6 hervor, wobei die mit der Ausgestaltung nach den Figuren 2 und 4 übereinstimmenden Bauelemente mit den gleichen Bezugszeichen versehen sind. Im Gegensatz zu dem Ausgestaltungsbeispiel nach den Figuren 2 und 4 ist nach den Figuren 5 und 6 aber eine Stelleinrichtung 44 im Bereich der Unterlenker 6 und 7 angeordnet. Diese Stelleinrichtung 44 ist ebenfalls als Pendelbrücke 45 ausgebildet und weist einen Basislenker 46 sowie einen Pendellenker 47 auf. Diese beiden Lenker 46 und 47 sind mittig über eine Schwenkachse 48 zueinander geführt.

Bei dieser Ausführung einer Geräteanbauvorrichtung 4 oder 4a sind allerdings keine Hubstreben und keine Hubarme vorgesehen, denn stattdessen greifen als Hubeinrichtung 49 zwei Hubzylinder 50 und 51 am Rahmenteil 9 des Arbeitsfahrzeugs 1 an. Die beiden Hubzylinder 50 und 51, die schwenkbar am Rahmenteil 9 geführt sind, greifen über eine starre Verbindung am Basislenker 46 an. Der Pendellenker 47 ist über Gelenke 52 und 53 mit den beiden Unterlenkern 6 und 7 verbunden.

### Bezugszeichenliste

- 1: Arbeitsfahrzeug
- 1a: Fahrzeugrahmen oder-block
- 1 b: Längsmittelebene von 1 a
- 2: Vorderräder
- 3: Hinterräder
- 4: heckseitige Geräteanbauvorrichtung
- 4a: frontseitige Geräteanbauvorrichtung
- 5: Anbaugerät hinten
- 5a: Anbaugerät vorn
- 6: Unterlenker
- 7: Unterlenker
- 8: Oberlenker
- 9: Rahmenteil von 1
- 10: Hubarm links
- 11: Hubarm rechts
- 12: Hubzylinder links
- 13: Hubzylinder rechts
- 14: Hubeinrichtung
- 15: erstes Schwenklager von 12 und 13
- 16: zweites Schwenklager von 12 und 13
- 16a: horizontale Achse
- 17: Hubstrebe
- 18: Hubstrebe
- 19: Konsole
- 20: Zwischenraum
- 21: Drehschemel
- 22: vertikale Achse
- 23: radiale Erstreckung an 21
- 24: Stellglied
- 25: erstes Ende von 6
- 26: erstes Ende von 7
- 27: horizontale Drehachse
- 28: zweites Ende von 6
- 29: zweites Ende von 7
- 30: Kuppelelement
- 31: Kuppelelement
- 32: Querstrebe
- 33: Stelleinrichtung
- 34: Pendelbrücke
- 35: Basislenker
- 36: Pendellenker
- 37: Schwenkachse
- 38: gabelförmige Lasche
- 39: gabelförmige Lasche
- 40: Kugelgelenk
- 41: Kugelgelenk
- 42: Kugelgelenk
- 43: Kugelgelenk
- 44: Stelleinrichtung
- 45: Pendelbrücke
- 46: Basislenker
- 47: Pendellenker
- 48: Schwenkachse
- 49: Hubeinrichtung
- 50: Hubzylinder
- 51: Hubzylinder
- 52: Gelenk
- 53: Gelenk

## Patentansprüche

1. Geräteanbauvorrichtung (4, 4a) eines Arbeitsfahrzeugs (1) mit einer Dreipunktaufhängung zur Aufnahme eines Anbaugerätes (5, 5a), welche ein Paar Unterlenker (6 und 7) sowie einen ortsfest am Arbeitsfahrzeug (1) angelenkten Oberlenker (8) aufweist, wobei die Unterlenker (6 und 7) mit zumindest einer Hubvorrichtung (14, 49) zusammenwirken, die an jedem der Unterlenker (6 und 7) zumindest mittelbar angreift, und jeweils mit einem ersten Ende (25, 26) über eine gemeinsame horizontale Drehachse (27) schwenkbar am Arbeitsfahrzeug (1) geführt sind, in einer Grundstellung unter einem identischen Winkel zu einer vertikalen Längsmittelebene (1 b) eines Fahrzeugrahmens oder -blocks (1a) des Arbeitsfahrzeuges (1) verlaufen und mit ihren zweiten Enden (28, 29) über mit Aufnahmen versehene Kuppelelemente (30, 31) an das Anbaugerät (5, 5a) kuppelbar sind, mit einer Schwenkeinrichtung zur synchronen Verlagerung der Unterlenker (6 und 7) aus ihrer Grundstellung heraus in eine Position, in welcher der Winkel des einen Unterlenkers (7) vergrößert und der des anderen Unterlenkers (6) analog verkleinert ist, **dadurch gekennzeichnet, dass** zwischen der zumindest einen Hubvorrichtung (14, 49) und jedem der Unterlenker (6 und 7) eine Stelleinrichtung (33, 44) angeordnet ist, mittels welcher bei einer durch die Schwenkeinrichtung bewirkten Verlagerung der Unterlenker (6 und 7) eine unveränderte horizontale Lage von deren zweiten Enden (28 und 29) beibehalten wird.

2. Geräteanbauvorrichtung (4, 4a) eines Arbeitsfahrzeugs (1) nach Patentanspruch 1, **dadurch gekennzeichnet, dass** die Stelleinrichtung (33) über Hubstreben (17 und 18) mit jedem der Unterlenker (6 und 7) verbunden ist.

3. Geräteanbauvorrichtung (4, 4a) eines Arbeitsfahrzeugs (1) nach Patentanspruch 1, **dadurch gekennzeichnet, dass** die Stelleinrichtung (44) unmittelbar an den Unterlenkern (6 und 7) angreift.

4. Geräteanbauvorrichtung (4, 4a) eines Arbeitsfahrzeugs(1) nach Patentanspruch 2, **dadurch gekennzeichnet, dass** die Stelleinrichtung (33) als Pendelbrücke (34) ausgebildet ist, wobei ein Basislenker (35) und ein Pendellenker (36) mittig über eine Schwenkachse (37) zueinander geführt sind, wobei die Hubeinrichtung (14) zwei am Arbeitsfahrzeug angelenkte Hubarme (10 und 11) aufweist, die jeweils starr mit den Enden des Basislenkers (35) verbunden sind, und wobei beide Enden des Pendellenkers jeweils über Kugelgelenke (40, 41) an den Hubstreben (17 und 18) angreifen.

5. Geräteanbauvorrichtung (4, 4a) eines Arbeitsfahrzeugs (1) nach Patentanspruch 3, **dadurch gekennzeichnet, dass** die Stelleinrichtung (44) als Pendelbrücke (45) ausgebildet ist, wobei ein Basislenker (46) und ein Pendellenker (47) mittig über eine Schwenkachse (48) zueinander geführt sind, wobei die Hubeinrichtung (49) zwei den Unterlenkern (6 und 7) zugeordnete Hubzylinder (50 und 51) aufweist, die jeweils mit einem ersten Ende am Arbeitsfahrzeug (1) und mit einem zweiten Ende am Basislenker (35) angreifen, und wobei beide Enden des Pendellenkers (36) über Gelenke (52 und 53) mittelbar oder unmittelbar mit den Unterlenkern (6 und 7) verbunden sind.

6. Geräteanbauvorrichtung(4, 4a) eines Arbeitsfahrzeugs (1) nach Patentanspruch 4, **dadurch gekennzeichnet, dass** die Schwenkachse (37) der Pendelbrücke (34) im Wesentlichen in der gemeinsamen Ebene der Hubarme (10 und 11) verläuft.

7. Geräteanbauvorrichtung(4, 4a) eines Arbeitsfahrzeugs (1) nach Patentanspruch 4, **dadurch gekennzeichnet, dass** die Schwenkachse (48) der Pendelbrücke (45) in der Grundstellung der Unterlenker (6 und 7) im Wesentlichen auf einer Ebene oder parallel zu einer Ebene der Unterlenker (6 und 7) verläuft.

8. Geräteanbauvorrichtung (4, 4a) eines Arbeitsfahrzeugs (1) nach einem der Patentansprüche 1, 4 oder 5, **dadurch gekennzeichnet, dass** die Unterlenker (6 und 7) mittels ihrer ersten Enden (25 und 26) vertikal schwenkbar an einem am Arbeitsfahrzeug (1) angeordneten als Schwenkeinrichtung dienenden Drehschemel (21) geführt sind, wobei der Drehschemel (21) über eine im Wesentlichen vertikale Achse (22) drehbar am Arbeitsfahrzeug (1) gelagert und über zumindest ein an diesem radial angreifendes Stellglied (24) verstellbar ist.

9. Geräteanbauvorrichtung (4, 4a) eines Arbeitsfahrzeugs (1) nach Patentanspruch 8, **dadurch gekennzeichnet, dass** zwischen den Unterlenkern (6 und 7) mit Abstand zu deren zweiten Enden (28 und 29) eine Querstrebe (32) angeordnet ist.

10. Geräteanbauvorrichtung (4, 4a) eines Arbeitsfahrzeugs (1) nach Patentanspruch 1, **dadurch gekennzeichnet, dass** die Unterlenker (6 und 7) an ihren ersten Enden (25 und 26) über Kugelgelenke schwenkbar geführt sind und die Schwenkeinrichtung als seitlich an den Unterlenkern (6 und 7) angreifende Hydraulikzylinder ausgebildet ist.

## Claims

1. An implement attachment apparatus (4, 4a) of a working vehicle (1) having a three-point suspension for receiving an attachment implement (5, 5a), which suspension has a pair of lower links (6 and 7) and an upper link (8) pivotably mounted stationarily on the working vehicle (1), wherein the lower links (6 and 7) cooperate with at least one lift device (14, 19) which at least indirectly engages each of the lower links (6 and 7) and are respectively guided with a first end (25, 26) pivotably on the working vehicle (1) by way of a common horizontal axis of rotation (27), extend in a basic position at an identical angle relative to a vertical longitudinal central plane (1b) of a vehicle frame or block (1a) of the working vehicle (1) and can be coupled with their second ends (28, 29) to the attachment implement (5, 5a) by way of coupling elements (30, 31) provided with receiving means, with a pivoting device for synchronously displacing the lower links (6 and 7) out of their basic position into a position in which the angle of the one lower link (7) is increased and that of the other lower link (6) is similarly reduced, **characterised in that** arranged between the at least one lift device (14, 49) and each of the lower links (6 and 7) is an actuating device (33, 34), by means of which in a displacement of the lower links (6 and 7) caused by the pivoting device an unchanged horizontal position of the second ends (28 and 29) thereof is maintained.

2. An implement attachment apparatus (4, 4a) of a working vehicle (1) according to claim 1 **characterised in that** the actuating device (33) is connected to each of the lower links (6 and 7) by way of lift struts (17 and 18).

3. An implement attachment apparatus (4, 4a) of a working vehicle (1) according to claim 1 **characterised in that** the actuating device (44) directly engages the lower links (6 and 7).

4. An implement attachment apparatus (4, 4a) of a working vehicle (1) according to claim 2 **characterised in that** the actuating device (33) is in the form of a swing bridge (34), wherein a base link (35) and a swing link (36) are guided centrally by way a pivot axis (37) relative to each other, wherein the lift device (14) has two lift arms (10 and 11) which are pivotably mounted to the working vehicle and which are respectively connected rigidly to the ends of the base link (35) and wherein both ends of the swing link respectively engage the lift struts (17 and 18) by way of ball joints (40, 41).

5. An implement attachment apparatus (4, 4a) of a working vehicle (1) according to claim 3 **characterised in that** the actuating device (44) is in the form of a swing bridge (45), wherein a base link (46) and a swing link (47) are guided centrally by way of a pivot axis (48) relative to each other, wherein the lift device (49) has two lift cylinders (50 and 51) which are associated with the lower links (6 and 7) and which respectively engage the working vehicle (1) with a first end and the base link (35) with a second end and wherein both ends of the swing link (36) are directly or indirectly connected to the lower links (6 and 7) by way of joints (52 and 53).

6. An implement attachment apparatus (4, 4a) of a working vehicle (1) according to claim 4 **characterised in that** the pivot axis (37) of the swing bridge (34) extends substantially in the common plane of the lift arms (10 and 11).

7. An implement attachment apparatus (4, 4a) of a working vehicle (1) according to claim 4 **characterised in that** the pivot axis (48) of the swing bridge (45) in the basic position of the lower links (6 and 7) extends substantially on a plane or parallel to a plane of the lower links (6 and 7).

8. An implement attachment apparatus (4, 4a) of a working vehicle (1) according to one of claims 1, 4 and 5 **characterised in that** the lower links (6 and 7) are guided vertically pivotably by means of their first ends (25 and 26) on a rotary plate (21) which is arranged on the working vehicle (1) and serves as the pivoting device, wherein the rotary plate (21) is mounted to the working vehicle (1) rotatably by way of a substantially vertical axis (22) and is displaceable by way of at least one actuating member (24) radially engaging the working vehicle.

9. An implement attachment apparatus (4, 4a) of a working vehicle (1) according to claim 8 **characterised in that** a transverse strut (32) is arranged between the lower links (6 and 7) at a spacing relative to the second ends (28 and 29) thereof.

10. An implement attachment apparatus (4, 4a) of a working vehicle (1) according to claim 1 **characterised in that** the lower links (6 and 7) are guided pivotably at their first ends (25 and 26) by way of ball joints and the pivoting device is in the form of hydraulic cylinders laterally engaging the lower links (6 and 7).

## Revendications

1. Dispositif d'attelage pour outil (4, 4a) d'un véhicule de travail (1) avec un moyen de suspension à trois points destiné à recevoir un outil porté (5, 5a), lequel présente une paire de bras inférieurs (6 et 7) ainsi qu'un bras supérieur (8) articulé en position fixe sur le véhicule de travail (1), les bras inférieurs (6 et 7) coopérant avec au moins un dispositif de levage (14, 49) qui agit au moins indirectement sur chacun des bras inférieurs (6 et 7) et étant guidés chacun à une première extrémité (25, 26) de façon pivotante sur le véhicule de travail (1) autour d'un axe de rotation horizontal commun (27), s'étendant dans une position de base suivant un angle identique par rapport à un plan médian longitudinal vertical (1b) d'un châssis ou bloc de véhicule (1a) du véhicule de travail (1) et pouvant être accouplés par leurs deuxièmes extrémités (28, 29) à l'outil porté (5, 5a) au moyen d'éléments d'accouplement (30, 31) munis de logements, avec un dispositif de pivotement pour le déplacement synchrone des bras inférieurs (6 et 7) depuis leur position de base dans une position dans laquelle l'angle d'un bras inférieur (7) augmente et celui de l'autre bras inférieur (6) diminue de manière analogue, **caractérisé en ce qu'**entre ledit au moins un dispositif de levage (14, 49) et chacun des bras inférieurs (6 et 7) est disposé un dispositif de réglage (33, 44) qui, lors d'un déplacement des bras inférieurs (6 et 7) provoqué par le dispositif de pivotement, permet de maintenir inchangée la position horizontale de leurs deux extrémités (28 et 29).

2. Dispositif d'attelage pour outil (4, 4a) d'un véhicule de travail (1) selon la revendication 1, **caractérisé en ce que** le dispositif de réglage (33) est relié à chacun des bras inférieurs (6 et 7) au moyen de chandelles (17 et 18).

3. Dispositif d'attelage pour outil (4, 4a) d'un véhicule de travail (1) selon la revendication 1, **caractérisé en ce que** le dispositif de réglage (44) agit directement sur les bras inférieurs (6 et 7).

4. Dispositif d'attelage pour outil (4, 4a) d'un véhicule de travail (1) selon la revendication 2, **caractérisé en ce que** le dispositif de réglage (33) est réalisé sous la forme d'un pont oscillant (34), un bras de base (35) et un bras oscillant (36) étant guidés de façon centrée l'un par rapport à l'autre autour d'un axe de pivotement (37), le dispositif de levage (14) présentant deux bras de levage (10 et 11) articulés sur le véhicule de travail et reliés chacun rigidement aux extrémités du bras de base (35), et deux extrémités du bras oscillant agissant sur les chandelles (17 et 18) par l'intermédiaire d'articulations à rotule (40, 41) respectives.

5. Dispositif d'attelage pour outil (4, 4a) d'un véhicule de travail (1) selon la revendication 3, **caractérisé en ce que** le dispositif de réglage (44) est réalisé sous la forme d'un pont oscillant (45), un bras de base (46) et un bras oscillant (47) étant guidés de façon centrée l'un par rapport à l'autre autour d'un axe de pivotement (48), le dispositif de levage (49) présentant deux vérins de levage (50 et 51) qui associés aux bras inférieurs (6 et 7) et agissant chaque fois par une première extrémité sur le véhicule de travail (1) et par une deuxième extrémité sur le bras de base (35), les deux extrémités du bras oscillant (36) étant reliées indirectement ou directement aux bras inférieurs (6 et 7) au moyen d'articulations (52 et 53).

6. Dispositif d'attelage pour outil (4, 4a) d'un véhicule de travail (1) selon la revendication 4, **caractérisé en ce que** l'axe de pivotement (37) du pont oscillant (34) s'étend sensiblement dans le plan commun des bras de levage (10 et 11).

7. Dispositif d'attelage pour outil (4, 4a) d'un véhicule de travail (1) selon la revendication 4, **caractérisé en ce que**, dans la position de base des bras inférieurs (6 et 7), l'axe de pivotement (48) du pont oscillant (45) s'étend sensiblement dans un plan ou parallèlement à un plan des bras inférieurs (6 et 7).

8. Dispositif d'attelage pour outil (4, 4a) d'un véhicule de travail (1) selon l'une des revendications 1, 4 ou 5, **caractérisé en ce que** les bras inférieurs (6 et 7) sont guidés par leurs premières extrémités (25 et 26) de façon pivotante verticalement sur une traverse pivotante (21) disposée sur le véhicule de travail (1) et servant de dispositif de pivotement, la traverse pivotante (21) étant montée rotative sur le véhicule de travail (1) autour d'un axe sensiblement vertical (22) et étant réglable au moyen d'au moins un organe de réglage (24) qui agit radialement sur elle.

9. Dispositif d'attelage pour outil (4, 4a) d'un véhicule de travail (1) selon la revendication 8, **caractérisé en ce qu'**une entretoise transversale (32) est disposée entre les bras inférieurs (6 et 7) à distance de leurs deuxièmes extrémités (28 et 29).

10. Dispositif d'attelage pour outil (4, 4a) d'un véhicule de travail (1) selon la revendication 1, **caractérisé en ce que** les bras inférieurs (6 et 7) sont guidés de façon pivotante à leurs premières extrémités (25 et 26) au moyen d'articulations à rotule, et le dispositif de pivotement est réalisé sous la forme de vérins hydrauliques agissant latéralement sur les bras inférieurs (6 et 7).
